# EUROPEAN PATENT APPLICATION

(11) **EP 3 616 885 A1**
(43) Date of publication of application: **04.03.2020**
(21) Application number: 19175498.5
(22) Date of filing: 20.05.2019
(51) Int. Cl.: B29C 64/118, B29C 64/393, B33Y 30/00, B33Y 50/02

(54) **THREE-DIMENSIONAL PRINTING METHOD AND THREE-DIMENSIONAL PRINTING DEVICE**

(30) Priority: 03.09.2018 CN 201811022642
(71) Applicant: XYZprinting, Inc., New Taipei City 22201 (TW); Kinpo Electronics, Inc., New Taipei City 22201 (TW)
(72) Inventor: HSIEH, Hsin-Ta, 22201 New Taipei City (TW); LIN, Yi-Ying, 22201 New Taipei City (TW); WU, Bo-Yi, 22201 New Taipei City (TW)
(74) Representative: Emde, Eric

(57) **Abstract**

A three-dimensional printing method and a three-dimensional printing device are provided. The three-dimensional printing method includes the following steps: obtaining printing information of a plurality of sliced objects and determine an top surface area of the three-dimensional object according to the printing information; obtaining first printing information of the top surface area in the printing information; driving a nozzle module according to the printing information to print the three-dimensional object. In the process of printing the three-dimensional object, the method further includes: driving the nozzle module to move above the top surface area again according to the first printing information to heat a plurality of printing materials located on the top surface area after the top surface area is printed such that the plurality of printing materials are heated to a molten state to fill gaps between the plurality of printing materials.

## Description

### BACKGROUND

### Technical Field

The present invention relates to a printing device, and more particularly to a three-dimensional printing method and a three-dimensional printing device.

### Description of Related Art

In recent years, with the development of science and technology, methods for constructing three-dimensional objects using layer-by-layer construction models such as additive manufacturing technology have been proposed. In general, the basic principle of the aforementioned technology is to use 3D computer-aided design (CAD) or other software to construct the design data of the 3D model, and convert it into multiple thin (quasi-two-dimensional) cross-section layers that are continuously stacked, and then the three-dimensional printing machine prints the cross-section layers laterally in the X-Y plane, and intermittently shifts the thickness of the layer at the Z coordinate to form a three-dimensional object.

Taking a fused deposition modeling (FDM) three-dimensional printing technique as an example, after heating and melting various hot-melt linear materials, the semi-fluid linear materials are extruded from the discharge hole of the nozzle and stacked layer by layer on the platform according to the desired contours to form a three-dimensional object. Generally, since the discharge hole of the nozzle of the three-dimensional printing device is substantially circular, the cross-section of the printed line is also substantially circular when printing each line. When the lines are arranged in a strip shape to form the surface of the object, large gaps are formed between the printing lines, so that the surface of the three-dimensional object is more likely to appear uneven and not flat. Therefore, the surface of the three-dimensional object is not close to a flat surface which is originally expected, so that the surface of the three-dimensional object exhibits a noticeable roughness and reduces the printing quality in printing the three-dimensional printing object.

### SUMMARY

In view of this, the present invention provides a three-dimensional printing method and a three-dimensional printing device, which can reduce gap between the printing lines, thereby achieving smoothing the top surface of the three-dimensional object and effectively improving the quality of the three-dimensional printing.

The present invention provides a three-dimensional printing method for a three-dimensional printing device. The three-dimensional printing device is configured to print a three-dimensional object, the three-dimensional printing method includes the following steps: obtaining a plurality of sliced objects corresponding to a three-dimensional model of the three-dimensional object; obtaining printing information of the plurality of sliced objects; determining an top surface area of the three-dimensional object according to the printing information; obtaining first printing information of the top surface area in the printing information; and driving a nozzle module according to the printing information to print the three-dimensional object, wherein in the process of printing the three-dimensional object, the method further includes: driving the nozzle module to move above the top surface area again according to the first printing information to heat a plurality of printing materials located on the top surface area after the top surface area is printed.

In an embodiment of the invention, in the three-dimensional printing method mentioned above, the plurality of sliced objects include a first sliced object and a second sliced object which are adjacent to each other. The three-dimensional printing method mentioned above further includes the following steps: obtaining second printing information of the first sliced object and third printing information of the second sliced object in the printing information; determining whether a first area in the first sliced object is covered by at least a portion of the second sliced object according to the second printing information and the third printing information; and when the first area in the first sliced object is not covered by at least a portion of the second sliced object, determining that the first area is the top surface area.

In an embodiment of the invention, the three-dimensional printing method mentioned above further includes the following steps: obtaining fourth printing information of the first area in the second printing information; and extracting part of the information in the fourth printing information as the first printing information.

In an embodiment of the invention, the three-dimensional printing method mentioned above further includes the following steps: driving the nozzle module according to the second printing information to print the first sliced object, and performing the step of driving the nozzle module to move above the top surface area again according to the first printing information after the first sliced object is printed.

In an embodiment of the invention, the printing information comprises a moving coordinate of the nozzle module, a moving speed, and an output speed of the plurality of printing materials, the first printing information comprises the moving coordinates and the moving speed and does not comprise the output speed of the plurality of printing materials.

In an embodiment of the invention, in the step of printing the three-dimensional object, a bottom plane of a nozzle of the nozzle module contacts the plurality of printing materials constituting the three-dimensional object such that a flattened plane is generated on the top of the plurality of printing materials.

In an embodiment of the invention, the plurality of printing materials are heated to a molten state to fill gaps between the plurality of printing materials.

In an embodiment of the invention, the three-dimensional printing method mentioned above further includes the following steps: driving the nozzle module to move above the top surface area again according to the first printing information, a temperature of the nozzle module is maintained at a same temperature used in printing the plurality of sliced objects.

In an embodiment of the invention, the three-dimensional printing device is a fused deposition modeling (FDM) three-dimensional printing device.

In an embodiment of the invention, the printing information is a G-code file.

The invention provides a three-dimensional printing device for printing a three-dimensional object. The three-dimensional printing device includes a nozzle module, a controller and a processor. The nozzle module is disposed on the three-dimensional printing device. The controller is coupled to the nozzle module. The processor is coupled to the controller. The processor is configured to obtain a plurality of sliced objects corresponding to a three-dimensional model of the three-dimensional object. The processor is further configured to obtain printing information of the plurality of sliced objects. The processor is further configured to determine a top surface area of the three-dimensional object according to the printing information. The processor is further configured to obtain first printing information of the top surface area in the printing information. Then, the controller is configured to drive the nozzle module according to the printing information to print the three-dimensional object, wherein in the process of printing the three-dimensional object, the controller is further configured to drive the nozzle module to move above the top surface area again according to the first printing information to heat a plurality of printing materials located on the top surface area after the top surface area is printed.

In an embodiment of the invention, the plurality of sliced objects comprise an first sliced object and a second sliced object which are adjacent to each other, wherein in the operation of determining the top surface area of the three-dimensional object according to the printing information, the processor is further configured to obtain second printing information of the first sliced object and third printing information of the second sliced object in the printing information. The processor is further configured to determine whether a first area in the first sliced object is covered by at least a portion of the second sliced object according to the second printing information and the third printing information. Then when the first area in the first sliced object is not covered by at least a portion of the second sliced object, the processor is further configured to determine that the first area is the top surface area.

In an embodiment of the invention, wherein in the operation of obtaining the first printing information of the top surface area in the printing information, the processor is further configured to obtain fourth printing information of the first area in the second printing information, and the processor is further configured to extract part of the information in the fourth printing information as the first printing information.

In an embodiment of the invention, wherein in the operation of driving the nozzle module according to the printing information to print the three-dimensional object, the controller is further configured to drive the nozzle module according to the second printing information to print the first sliced object, and performing the operation of driving the nozzle module to move above the top surface area again according to the first printing information after the first sliced object is printed.

In an embodiment of the invention, the printing information comprises a moving coordinate of the nozzle module, a moving speed, and an output speed of the plurality of printing materials, the first printing information comprises the moving coordinates and the moving speed and does not comprise the output speed of the plurality of printing materials.

In an embodiment of the invention, wherein in the operation of printing the three-dimensional object, a bottom plane of a nozzle of the nozzle module contacts the plurality of printing materials constituting the three-dimensional object such that a flattened plane is generated on the top of the plurality of printing materials.

In an embodiment of the invention, plurality of printing materials are heated to a molten state to fill gaps between the plurality of printing materials.

In an embodiment of the invention, wherein in the operation of driving the nozzle module to move above the top surface area again according to the first printing information, a temperature of the nozzle module is maintained at a same temperature used in printing the plurality of sliced objects.

In an embodiment of the invention, the three-dimensional printing device is a fused deposition modeling (FDM) three-dimensional printing device.

In an embodiment of the invention, the printing information is a G-code file.

Based on the above, the three-dimensional printing method and the three-dimensional printing device of the present invention can fill the gaps between the printing lines and make the gaps less obvious, thereby achieving smoothing the top surface of the three-dimensional object and effectively improving the quality of the three-dimensional printing.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a block diagram of a three-dimensional printing device according to an embodiment of the invention.
FIG. 2 is a schematic diagram of a three-dimensional printing device according to an embodiment of the invention.
FIG. 3 is a schematic diagram of a nozzle of a three-dimensional printing device according to an embodiment of the invention.
FIG. 4 is a schematic diagram of printing materials according to an embodiment of the invention.
FIG. 5 is a flow chart of a three-dimensional printing method according to an embodiment of the invention.
FIG. 6 is a schematic diagram of printing information of a sliced object according to an embodiment of the invention.
FIG. 7 is a schematic diagram showing an example of printing materials according to an embodiment of the invention.

### DESCRIPTION OF THE EMBODIMENTS

The part of the present invention will be described in detail in the following embodiments in conjunction with the accompanying drawings. These examples are only a part of the invention and do not disclose all of the embodiments of the invention. More specifically, these embodiments are merely examples of the three-dimensional printing method and the three-dimensional printing device in the scope of the patent application of the present invention.

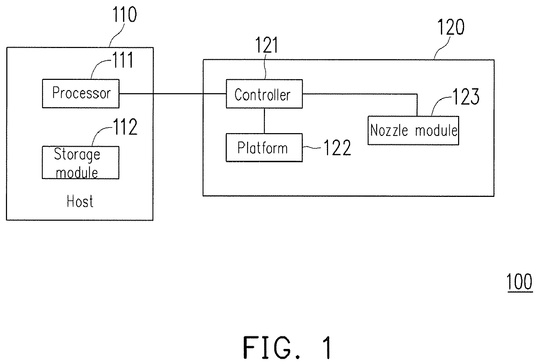

FIG. 1 is a block diagram of a three-dimensional printing device according to an embodiment of the invention. Referring to FIG. 1, in the present embodiment, the three-dimensional printing device 100 includes a host 110 and a printing device 120. The three-dimensional printing device 100 is configured to print a three-dimensional object according to printing information of a three-dimensional model. In an embodiment, the three-dimensional printing device 100 may be a fused deposition modeling three-dimensional printing device. In the present embodiment, the three-dimensional model may be a three-dimensional digital image file which may be constructed, for example, by the host 110 through computer-aided design (CAD) or animation modeling software.

Further, the host 110 is a device having an arithmetic function. For example, the host 110 can be a computer device such as a notebook computer, a tablet computer, or a desktop computer. The present invention does not limit the type of the host 110. The host 110 can edit and process the three-dimensional model and transmit the relevant printing information to the printing device 120, so that the printing device 120 can print the three-dimensional object according to the printing information.

The host 110 includes a processor 111 and a storage module 112. The processor 111 is, for example, a central processing unit (CPU), or other programmable general purpose or special purpose microprocessor, a digital signal processor (DSP), a programmable controller, an application specific integrated circuit (ASIC), a programmable logic device (PLD) or other similar components or a combination of the components mentioned above, which is not limited in the present invention.

The storage module 112 is, for example, a fixed or removable random access memory (RAM), a read-only memory (ROM), a flash memory, a hard disk, or a combination of one or more of other similar devices. The storage module 112 records a plurality of instructions or programs executable by the processor 111.

Specifically, the processor 111 compiles and calculates slice information of each sliced object of the three-dimensional model to generate printing information according to which the printing device 120 can perform the printing function. In detail, when the processor 111 performs the layering process on the three-dimensional model, the three-dimensional model is vertically cut at a fixed interval of slice planes, and the cross-sectional profile of each sliced object is extracted. Next, the processor 111 takes the outer wall of the shape appearance of the cross-sectional profile of each sliced object as a closed contour structure, and fills a line segment of a specific direction into the closed contour structure of each sliced object as an internal filling structure, thereby adjusting strength of the printed product.

Then, the processor 111 generates a corresponding control code file according to the closed contour structure and the internal filling structure. Here, the control code file is the printing information that the printing device 120 can read and perform the printing function. In an embodiment, the printing information is, for example, a G-code file.

The printing device 120 is coupled to the host 110. The printing device 120 includes a controller 121, a platform 122, and a nozzle module 123. The printing device 120 prints the three-dimensional object according to the printing information transmitted by the host 110. In detail, the controller 121 controls the components of the printing device 120 according to the printing information to repeatedly print the printing materials at a specific location until the entire three-dimensional object is generated.

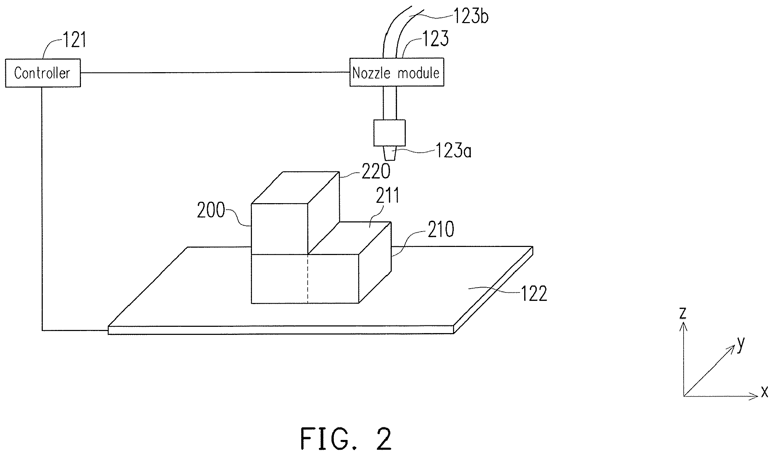

FIG. 2 is a schematic diagram of a three-dimensional printing device according to an embodiment of the invention. Referring to FIG. 2, a Cartesian coordinate system is provided at the same time to facilitate the description of the associated components and their motion states. In this embodiment, the nozzle module 123 is disposed above the platform 122. The nozzle module 123 includes printing raw materials 123b and a nozzle 123a. The printing raw materials 123b may be a hot-melt wire suitable for fuse manufacturing. The nozzle module 123 feeds the printing raw materials 123b to the nozzle 123a. The nozzle 123a heats the printing raw materials 123b to a slightly molten state, and then extrudes the high-temperature slightly molten printing raw materials 123b via the nozzle 123a. At this time, the slightly molten printing raw materials 123b is solidified layer by layer on the bearing surface of the platform 122 to form the three-dimensional object 200.

Further, the controller 121 is coupled to the processor 111 and coupled to the platform 122 and the nozzle module 123. The controller 121 controls overall operations of the nozzle module 123 according to the printing information to print the three-dimensional object 200. For example, the controller 121 can control the moving path and moving speed of the nozzle 123a, or control the output speed of the printing material 123b according to the printing information. The moving path of the nozzle 123a is configured to move along the X-Y plane and along the normal direction (Z-axis) of the X-Y plane. The controller 121 is, for example, a device having a computing function such as a central processing unit, a chipset, a microprocessor, or a microcontroller, and the present invention is not limited thereto.

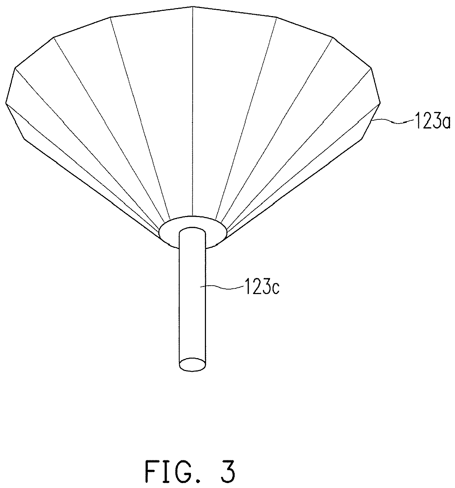

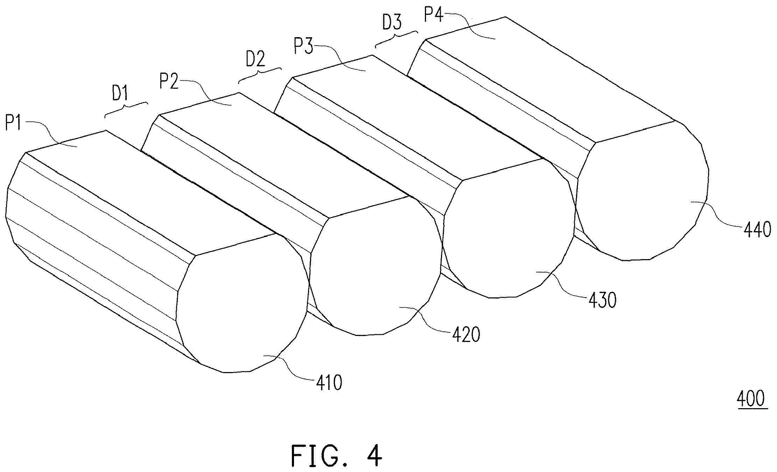

FIG. 3 is a schematic diagram of a nozzle of a three-dimensional printing device according to an embodiment of the invention. FIG. 4 is a schematic diagram of printing materials according to an embodiment of the invention. Please refer to FIG. 2, FIG. 3 and FIG. 4 at the same time. In detail, when the nozzle 123a extrudes the printing raw materials 123b into a high-temperature slightly molten printing output materials 123c, the printing output materials 123c will be solidified one by one on the bearing surface of the platform 122 to form printing materials 410-440. At this time, since the bottom area of the nozzle 123a is larger than the discharge hole of the nozzle 123a, when printing each of the printing materials 410-440, the bottom plane of the nozzle 123a is in contact with the printing materials 410-440, so that the top of the printing materials 410-440 produces a flattened print material plane P1-P4. Gaps D1-D3 are generated between the printed printing materials 410-440. These gaps D1-D3 cause the three-dimensional object 200 to produce an uneven surface.

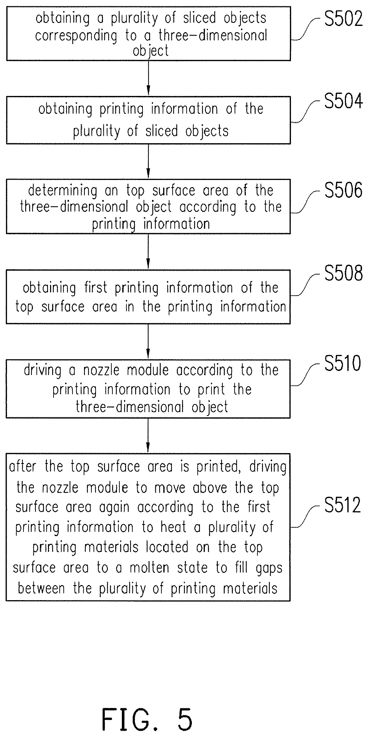

FIG. 5 is a flow chart of a three-dimensional printing method according to an embodiment of the invention. The method of this embodiment is applicable to the three-dimensional printing device 100 of FIG1. The detailed steps of the three-dimensional printing method of the present embodiment will be described below in conjunction with the respective components of the three-dimensional printing device 100. In order to facilitate the description of the present invention, FIG. 5 will continue to illustrate the example of printing the three-dimensional object 200 of FIG. 2 by the three-dimensional printing device 100.

In step S502, the processor 111 obtains a plurality of sliced objects corresponding to a three-dimensional model of the three-dimensional object 200. In this embodiment, after the processor 111 performs a layering process on the three-dimensional model, the first sliced object 210 and the second sliced object 220 which are adjacent to each other may be acquired.

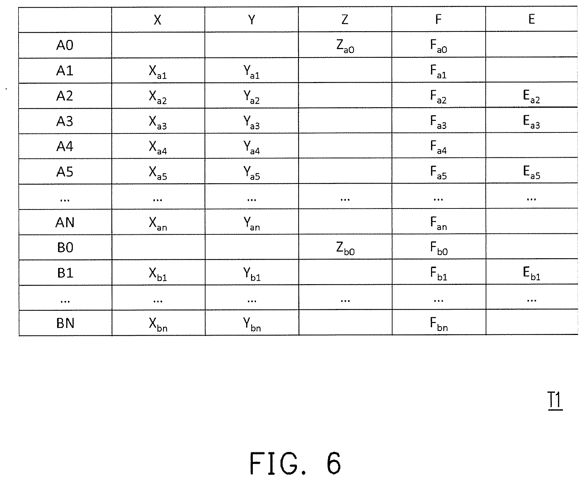

In step S504, the processor 111 obtains printing information of the plurality of sliced objects. Please refer to FIG. 2 and FIG. 6 simultaneously. FIG. 6 is a schematic diagram of printing information of a sliced object according to an embodiment of the invention. After the processor 111 performs the layering process on the three-dimensional object 200, the processor 111 may generate the printing information of the three-dimensional object 200. The printing information of the three-dimensional object 200 includes the printing information of each of the sliced objects. As shown in the table T1, in the present embodiment, the printing information of the three-dimensional object 200 includes printing information AO-AN of the first sliced object 210 and printing information BO-BN of the second sliced object 220. In an embodiment, parameters of the printing information AO-AN of the first sliced object 210 include the X-axis moving coordinates Xa1-Xan, the Y-axis moving coordinates Yₐ₁-Yₐₙ, the Z-axis moving coordinate Zₐ₀, moving speeds Fₐ₀-Fₐₙ of the nozzle module and output speeds Eₐ₂, Eₐ₃ and Eₐ₅ of the printing materials of the nozzle module 123. At the same time, parameters of the printing information B₀-B_{N} of the second sliced object 220 include the X-axis moving coordinates X_{b1}-X_{bn}, the Y-axis moving coordinate Y_{b1}-Y_{bn}, the Z-axis moving coordinate Zb0, moving speeds F_{b0}-F_{bn} of the nozzle module and a output speed E_{b1} of the printing materials of the nozzle module 123.

In step S506, the processor 111 determines the top surface area 211 of the three-dimensional object 200 according to the printing information AO-AN, BO-BN. First, the processor 111 obtains the printing information AO-AN of the first sliced object 210 and the printing information BO-BN of the second sliced object 220. Next, the processor 111 determines whether an area in the first sliced object 210 is covered by at least a portion of the second sliced object 220 according to the printing information AO-AN and the printing information BO-BN. When an area in the first sliced object 210 is not covered by at least a portion of the second sliced object 220, the processor 111 determines that the area is a top surface area.

Specifically, please refer to FIG. 2 and FIG. 6 at the same time. The three-dimensional object 200 has the first sliced object 210 and the second sliced object 220 which are adjacent to each other. The printing information of the first sliced object 210 is printing information AO-AN and the printing information of the second sliced object 220 is printing information BO-BN. After the processor 111 obtains the printing information AO-AN and the printing information BO-BN, the processor 111 determines whether there are overlapping coordinates of the printing information BO-BN vertically above the X-Y plane normal direction (Z-axis) of partial coordinates of the printing information AO-AN or not. If there are no overlapping coordinates above the partial coordinates of the printing information AO-AN, it means that some of the coordinates of the printing information AO-AN are not covered by the second sliced object 220. The coordinates not covered by the second sliced object 220 are, for example, the coordinates (Xₐ₂, Yₐ₂) to (Xₐ₅, Yₐ₅) of the printing information A2-A5 in the table T1. At this time, the area printed according to the printing information A2-A5 is determined by the processor 111 as the top surface area 211. In another embodiment, the three-dimensional object 200 may have more layers of the sliced object, and the processor 111 determines each of the top surface areas of the three-dimensional object 200 according to the printing information of the respective sliced objects, which is not limited by the present invention. In the present invention, the top surface area 211 represents a horizontally upward region. As shown in FIG. 2, the horizontal means a plane perpendicular to the Z-axis (i.e., the X-Y plane). The upward means the forward direction of the top surface area 211 facing the Z-axis. Relative to the upward, the downward means the top surface area 211 faces the opposite direction of the Z-axis, and the representation is a horizontal hanging bottom surface or the bottommost surface of the object. In brief, the top surface area 211 represents the horizontally upward surface area of the solid object 200.

In step S508, the processor 111 obtains the first printing information A2'-A5' of the top surface area 211 in the printing information AO-AN. The processor 111 obtains the printing information related to the top surface area 211 of the printing information A1-AN of the first sliced object 210, for example, the printing information A2-A5 in the table T1. The processor 111 extracts part of the information in the printing information A2-A5 as the first printing information A2'-A5' In an embodiment, the information of the first printing information A2-A5' captured from the printing information A2-A5 may be a moving coordinate and a moving speed of the nozzle module 123. The information of the first printing information A2-A5' captured from the printing information A2-A5 does not include the output speed of the printing raw materials 123b. In detail, in the embodiment, the first printing information A2'-A5' is, for example, the X-axis moving coordinate Xₐ₂-Xₐ₅, the Y-axis moving coordinate Yₐ₂-Yₐ₅ of the nozzle module 123 and the moving speed Fₐ₂-Fₐ₅ of the nozzle nodule in the printing information A2-A5. The first printing information A2'-A5' does not include the output speeds Ea2, Ea3, and Ea5 of the printing materials.

In step S510, the controller 121 drives the nozzle module 123 to print the three-dimensional object 200 according to the printing information AO-AN, BO-BN. In this embodiment, the processor 111 transmits the printing information AO-AN of the first sliced object 210 and the printing information BO-BN of the second sliced object 220 in the table T1 to the controller 121. The controller 121 drives the nozzle module 123 according to the printing information AO-AN and BO-BN to print the three-dimensional object 200. In one embodiment, the printing information AO-AN and BO-BN include the X-axis moving coordinate X, the Y-axis moving coordinate Y, the Z-axis moving coordinate Z of the nozzle module 123, the moving speed F of the nozzle module, and the output speed E of the printing materials.

Then, in the process of printing the three-dimensional object 200, in step S512, after the top surface area 211 is printed, the controller 121 drives the nozzle module 123 to move above the top surface area 211 again according to the first printing information A2'-A5' such that the printing materials located on the top surface area 211 are heated to a molten state to fill gaps between the printing materials. In another embodiment, the processor 111 may again drive the nozzle module 123 to move above the top surface area 211 according to the first printing information A2'-A5' after the first sliced object 210 is printed. The invention is not limited thereto.

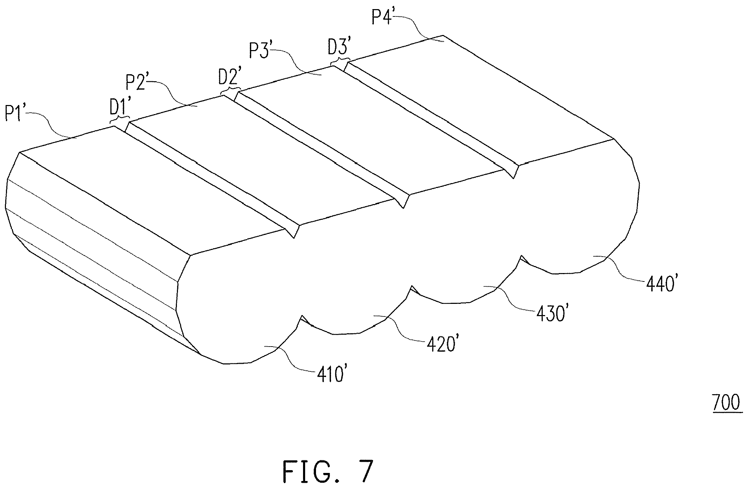

Specifically, please refer to FIG. 2, FIG. 4, and FIG. 7 at the same time. FIG. 7 is a schematic diagram showing an example of printing materials according to an embodiment of the invention. Referring to FIG. 4, first, in the present embodiment, the printing materials 410-440 in the printing material partial region 400 are printing lines of the top surface area 211. The printing materials 410-440 of the upper layer region 211 have gaps D1-D3 therebetween. The printing materials 410-440 have printing material planes PI to P4 respectively. Referring to FIG. 2 at the same time, in the embodiment, when the controller 121 drives the nozzle module 123 to move above the top surface area 211 of the first sliced object 210 again according to the first printing information A2'-A5', the nozzle 123a of the nozzle module 123 will again pass through the printed print materials 410-440. It should be noted that, in this embodiment, the first printing information A2'-A5' does not include the output speed E of the print materials. Therefore, when the nozzle 123a passes the printed printing materials 410-440 again according to the first printing information A2'-A5', the nozzle module 123 does not output the printing raw materials 123b.

Furthermore, the printing material planes P1-P4 of the printing materials 410-440 near the nozzle 123a are heated to a slightly molten state by the nozzle 123a and expanded to both sides to fill gaps D1-D3 between the printing materials 410-440. For example, regarding to the printing material partial region 700 in FIG. 7, the printing materials 410-440 are heated and slightly melted to form the printing materials 410'-440'. The printing material planes P1-P4 are expanded toward both sides to form the printing material planes P1'-P4' due to heating. At the same time, the gaps D1 to D3 between the printing materials 410-440 are reduced to form the gaps D1'-D3'. In this way, the top surface of the top surface area 211 can be smoothed to improve the quality of the three-dimensional printing. In an embodiment, when the controller 121 drives the nozzle module 123 to move above the top surface area 211 again according to the first printing information A2'-A5', the temperature of the nozzle module 123 is maintained at a same temperature used in printing the first sliced object 210.

In summary, the three-dimensional printing method and the three-dimensional printing device of the present invention can reduce the gaps between the printing lines without destroying the printing lines, thereby achieving smoothing of the top surface of the three-dimensional object and effectively improving the quality of three-dimensional printing.

## Claims

1. A three-dimensional printing method for a three-dimensional printing device (100), the three-dimensional printing device (100) being configured to print a three-dimensional object (200), the three-dimensional printing method comprising:
obtaining a plurality of sliced objects (210, 220) corresponding to a three-dimensional model of the three-dimensional object (200);
obtaining printing information (AO-AN, BO-BN) of the plurality of sliced objects (210, 220);
determining an top surface area (211) of the three-dimensional object (200) according to the printing information (AO-AN, BO-BN);
obtaining first printing information of the top surface area (211) in the printing information (AO-AN, BO-BN); and
driving a nozzle module (123) according to the printing information (AO-AN, BO-BN) to print the three-dimensional object (200), wherein in the process of printing the three-dimensional object (200), the method further comprising:
driving the nozzle module (123) to move above the top surface area (211) again according to the first printing information to heat a plurality of printing materials (410-440) located on the top surface area (211) after the top surface area (211) is printed.

2. The three-dimensional printing method of claim 1, wherein the plurality of sliced objects (210, 220) comprise an first sliced object (210) and a second sliced object (220) which are adjacent to each other, wherein the step of determining the top surface area (211) of the three-dimensional object (200) according to the printing information (AO-AN, BO-BN) comprises:
obtaining second printing information (AO-AN) of the first sliced object (210) and third printing information (B0-BN) of the second sliced object (220) in the printing information (AO-AN, BO-BN);
determining whether a first area in the first sliced object (210) is covered by at least a portion of the second sliced object (220) according to the second printing information (AO-AN) and the third printing information (B0-BN); and
when the first area in the first sliced object (210) is not covered by at least a portion of the second sliced object (220), determining that the first area is the top surface area (211).

3. The three-dimensional printing method of claim 2, wherein the step of obtaining the first printing information of the top surface area (211) in the printing information (AO-AN, BO-BN) comprises:
obtaining fourth printing information (A2-A5) of the first area in the second printing information (A0-AN); and
extracting part of the information in the fourth printing information (A2-A5) as the first printing information.

4. The three-dimensional printing method of claim 3, wherein the step of driving the nozzle module (123) according to the printing information (AO-AN, BO-BN) to print the three-dimensional object (200) comprises:
driving the nozzle module (123) according to the second printing information (AO-AN) to print the first sliced object (210), and performing the step of driving the nozzle module (123) to move above the top surface area (211) again according to the first printing information after the first sliced object (210) is printed.

5. The three-dimensional printing method of claim 1, wherein the printing information (AO-AN, BO-BN) comprises a moving coordinate (Xₐ₁-X_{bn}, Yₐ₁-Y_{bn}, Zₐ₀-Z_{b0}), a moving speed (Fₐ₀-F_{bn}) of the nozzle module (123), and an output speed (Eₐ₂-E_{b1}) of the plurality of printing materials (410-440), the first printing information comprises the moving coordinates (Xₐ₁-X_{bn}, Yₐ₁-Y_{bn}, Zₐ₀-Z_{b0}) and the moving speed (Fₐ₀-F_{bn}) and does not comprise the output speed (Eₐ₂-E_{b1}) of the plurality of printing materials (410-440).

6. The three-dimensional printing method of claim 1, wherein in the step of printing the three-dimensional object (200), a bottom plane of a nozzle (123a) of the nozzle module (123) contacts the plurality of printing materials (410-440) constituting the three-dimensional object (200) such that a flattened plane (P1-P4) is generated on the top of the plurality of printing materials (410-440).

7. The three-dimensional printing method of claim 1, wherein the plurality of printing materials (410-440) are heated to a molten state to fill gaps (D1-D3) between the plurality of printing materials (410-440).

8. The three-dimensional printing method of claim 1, wherein in the step of driving the nozzle module (123) to move above the top surface area (211) again according to the first printing information, a temperature of the nozzle module (123) is maintained at a same temperature used in printing the plurality of sliced objects (210, 220).

9. A three-dimensional printing device (100) for printing a three-dimensional object (200), the three-dimensional printing device (100) comprising:
a nozzle module (123) disposed on the three-dimensional printing device (100);
a controller (121) coupled to the nozzle module (123); and
a processor (111) coupled to the controller (121), the processor (111) is configured to obtain a plurality of sliced objects (210, 220) corresponding to a three-dimensional model of the three-dimensional object (200),
the processor (111) is further configured to obtain printing information (AO-AN, BO-BN) of the plurality of sliced objects (210, 220),
the processor (111) is further configured to determine an top surface area (211) of the three-dimensional object (200) according to the printing information (AO-AN, BO-BN),
the processor (111) is further configured to obtain first printing information of the top surface area (211) in the printing information (AO-AN, BO-BN), and
the controller (121) is configured to drive the nozzle module (123) according to the printing information (AO-AN, BO-BN) to print the three-dimensional object (200), wherein in the process of printing the three-dimensional object (200),
the controller (121) is further configured to drive the nozzle module (123) to move above the top surface area (211) again according to the first printing information to heat a plurality of printing materials (410-440) located on the top surface area (211) after the top surface area (211) is printed.

10. The three-dimensional printing device (100) according to claim 9, wherein the plurality of sliced objects (210, 220) comprise an first sliced object (210) and a second sliced object (220) which are adjacent to each other, wherein in the operation of determining the top surface area (211) of the three-dimensional object (200) according to the printing information (AO-AN, BO-BN),
the processor (111) is further configured to obtain second printing information (AO-AN) of the first sliced object (210) and third printing information (B0-BN) of the second sliced object (220) in the printing information (AO-AN, BO-BN),
the processor (111) is further configured to determine whether a first area in the first sliced object (210) is covered by at least a portion of the second sliced object (220) according to the second printing information (AO-AN) and the third printing information (B0-BN), and
when the first area in the first sliced object (210) is not covered by at least a portion of the second sliced object (220), the processor (111) is further configured to determine that the first area is the top surface area (211).

11. The three-dimensional printing device (100) according to claim 10, wherein in the operation of obtaining the first printing information of the top surface area (211) in the printing information (AO-AN, BO-BN),
the processor (111) is further configured to obtain fourth printing information (A2-A5) of the first area in the second printing information (A0-AN), and
the processor (111) is further configured to extract part of the information in the fourth printing information (A2-A5) as the first printing information,
wherein in the operation of driving the nozzle module (123) according to the printing information (AO-AN, BO-BN) to print the three-dimensional object (200),
the controller (121) is further configured to drive the nozzle module (123) according to the second printing information (AO-AN) to print the first sliced object (210), and performing the operation of driving the nozzle module (123) to move above the top surface area (211) again according to the first printing information after the first sliced object (210) is printed.

12. The three-dimensional printing device (100) of claim 9, wherein the printing information (AO-AN, BO-BN) comprises a moving coordinate (Xₐ₁-X_{bn}, Yₐ₁-Y_{bn}, Zₐ₀-Z_{b0}), a moving speed (Fₐ₀-F_{bn}) of the nozzle module (123), and an output speed (Eₐ₂-E_{b1}) of the plurality of printing materials (410-440), the first printing information comprises the moving coordinates (Xₐ₁-X_{bn}, Yₐ₁-Y_{bn}, Zₐ₀-Z_{b0}) and the moving speed (Fₐ₀-F_{bn}) and does not comprise the output speed (Eₐ₂-E_{b1}) of the plurality of printing materials (410-440).

13. The three-dimensional printing device (100) of claim 9, wherein in the operation of printing the three-dimensional object (200), a bottom plane of a nozzle (123a) of the nozzle module (123) contacts the plurality of printing materials (410-440) constituting the three-dimensional object (200) such that a flattened plane (P1-P4) is generated on the top of the plurality of printing materials (410-440).

14. The three-dimensional printing device (100) of claim 9, wherein the plurality of printing materials (410-440) are heated to a molten state to fill gaps (D1-D3) between the plurality of printing materials (410-440).

15. The three-dimensional printing device (100) of claim 9, wherein in the operation of driving the nozzle module (123) to move above the top surface area (211) again according to the first printing information, a temperature of the nozzle module (123) is maintained at a same temperature used in printing the plurality of sliced objects (210, 220).
